Europäisches Patentamt

European Patent Office

Office européen des brevets

(11) Publication number: **0 216 410**
**A1**

## EUROPEAN PATENT APPLICATION

(21) Application number: 86201445.3

(51) Int. Cl.⁴: **E02F 9/20**

(22) Date of filing: 21.08.86

(30) Priority: 28.08.85 NL 8502358

(43) Date of publication of application:
01.04.87 Bulletin 87/14

(84) Designated Contracting States:
DE FR GB IT

(71) Applicant: C. van der Lely N.V.
Weverskade 10 P.O. Box 26
NL-3155 ZG Maasland(NL)

(72) Inventor: Van der Lely, Cornelis
7, Brüschenrain
Zug(CH)

(74) Representative: Mulder, Herman et al
Octrooibureau Van der Lely N.V. Weverskade
10 P.O. Box 26
NL-3155 ZG Maasland(NL)

(54) A vehicle.

(57) The invention relates to a vehicle provided with an engine, (2) driven wheels (5) and at least one lifting device (8,13,22). In order to relieve the driver's task and to decrease the chance that errors and accidents occur during critical periods of handling, such as at the end of a strip of land turning the vehicle with attached implements, at least the lifting device can be actuated by means of a sound-responsive circuit (36).

Fig. 1

EP 0 216 410 A1

# A VEHICLE

The invention relates to a vehicle comprising an engine, a driver's seat, a plurality of engive-driven propelling means, such as wheels, and at least one lifting device.

Such known vehicles, for example an agricultural tractor, have the drawback that steering and contol of the vehicle require in some circumstances a large number of actions to be performed by the driver within a short period of time, so that there is a risk that these actions are effected in an incorrect sequence, only partly or at an undesired moment, which may lead to unwanted results and to accidents. These problems also occur with vehicles other than agricultural tractors, such as, for example, fork lift trucks or mobile cranes, in which the driver must often manoeuvre in a limited space, operate the drive and during driving must also operate the lifting device.

The invention has for its object to alleviate the driver's task by reducing the number of necessary actions to be performed by the driver with his hands and feet.

According to the invention, at least the lifting device can be operated by means of a sound-responsive circuit.

Thus it is possible for the driver to perform, during effecting a plurality of rapidly consecutive actions, a portion of the actions by speaking at least one command which reaches via acousting means a, for example, microphone. This command is converted by means of a circuit present on the vehicle into a pulse which operates a control member for a lifting device or an other member of the vehicle, for example a brake. Consequently, the driver needs to perform a smaller number of operations with his hands and/or feet in said circumstances, which may prevent faulty operations or accidents.

For a better understanding of the present invention and to show how it may be carried into effect, reference will now be made, by way of example, to the accompanying drawings, in which:

Figure 1 is a side view of an agricultural tractor arranged according to the invention;

Figure 2 is a schematic plan view of control members associated with the agricultural tractor of Figure 1;

Figure 3 is a side view of a fork lift truck arranged according to the invention;

Figure 4 is a schematic plan view of control members associated with the fork lift truck of Figure 3;

Figure 5 is a circuit diagram of an electronic circuit which is responsive to acoustic commands of the driver.

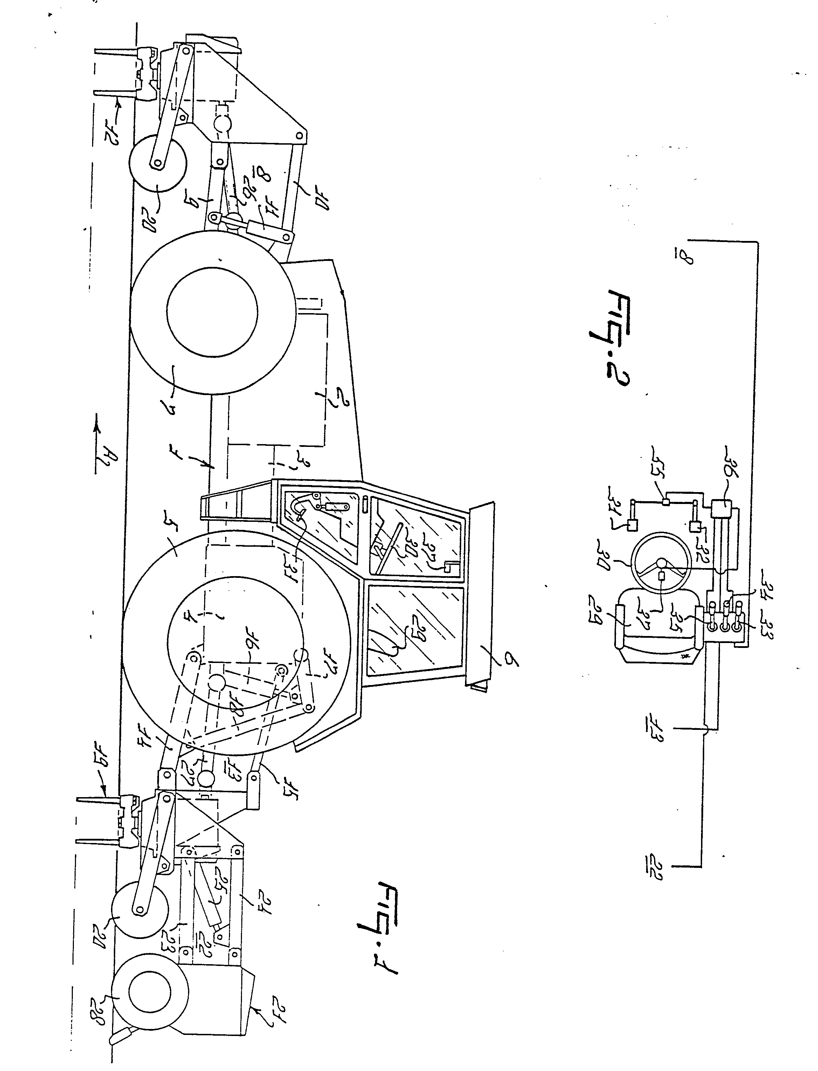

In a side view, the agricultural tractor shown in Figure 1 comprises a frame 1, an engine 2 which bears on the frame 1 a.:d drives drivable rear wheels 5 via a driver-operable clutch 3 and a likewise driver-operable gearbox 4. The tractor has steerable front wheels 7 which are drivable or not drivable.

At its front side the tractor is provided with a lifting device 8 which comprises spaced apart, adjacent, hydraulically up and down pivoting lower lifting arms 9 and also an upper lifting arm or top rod 10. In a manner known per se the lower lifting arms 9 are pivotable in the upward and downward direction by means of hydraulic cylinders 11, which can be operated from a driver's cabin 6. A soil cultivating machine, in this case a rotary harrow 12, is connected to the foremost coupling points of the foremost lifting device 8.

A three-point lifting device denoted by the reference numeral 13 is provided at the rear side of the tractor, which device comprises lower lifting arms 14 which are capable of hydraulically pivoting up and down and are positioned side-by-side and remote from each other, and an upper lifting arm, or top rod 15. The rearmost lifting device 13 includes two cylinders 16 which can operate pivotal levers 17 arranged on the tractor to pivot in the up and down directions, and to whose ends lifting rods 18 are coupled which at their bottom ends are pivotally connected to the lower lifting arms 14. A soil cultivating machine 19, in this case also a rotary harrow, is connected to the three coupling points of the lifting device 18. During operation, the rotary harrow 12 and the rotary harrow 19 each bear on the soil by means of a roller 20.

With respect to the direction of operative travel A a subsequent machine, in this case a seed drill 21, is connected to the rear side of the cultivating machine 19 by means of a three-point lifting device 22, being arranged at the rear side of said machine 19. The lifting device 22 also includes lower lifting arms 23 which are positioned side-by-side and remote from each other as well as one or more upper lifting arms 24.

The lifting device 22 is operable from the driver's cabin and comprises a hydraulic cylinder 25 which, as seen in side view, is pivotally supported near the foremost pivotal points of the lower lifting arms 23 of the soil cultivating machine 19, the end of the piston rod of the cylinder being pivotally connected to the upper lifting arm 24 (or lifting arms 24) at a location near the end of the lifting arm 24 facing the machine 21.

During operation the tractor with the three machines coupled thereto moves in the direction A, power take-off shafts of the tractor and intermediate shafts 26 and 27 respectively, coupled thereto, driving the rotary harrows 12 and 19 by means of the engine 2. The harrow 12 effects a pre-crumbling operation of the soil, whilst the harrow 19 finely distributes the soil particles for pre paring a seed bed; the seed drill 21 arranged behind the harrow 19 and driven by the land wheels 28 introduces seed into the seed bed prepared by the harrows 12 and 19.

During this mode of operation, the driver seated on the driver's seat 29 within the cabin has at his disposal, to operate the tractor and the machine coupled thereto, a steering wheel 30, a foot lever 31 for operating the clutch 3, a foot lever 32 for operating the brakes of the braking rear wheels 5 and/or front wheels 7, a lever, not shown, for operating the engine 2, levers, not shown, for switching on and off the foremost and rearmost power takeoff shafts, and also three levers 33, 34 and 35 for operating the respective lifting devices 8, 13 and 22.

If during operation of the machines 12, 19 and 21 the tractor approaches the end of a cultivated strip of soil, where the driver must move the tractor plus the machines through a curve of 180° so as to enable cultivation during the return travel of a contiguous strip of soil, the driver must in addition thereto perform a large number of actions in a very short period of time, the speed of the tractor still remaining the same, the lifting device 8 with the harrow 12 must first be lifted, after a short period of time, dictated by the spacing between the machines 12 and 19, the lifting device 13 must be lifted and briefly thereafter, dictated by the spacing between the machine 19 and the seed pipes of the machine 21, the hydraulic cylinder 25 which was not blocked during operation must be blocked, or the machine 21 must be lifted, respectively. At the same time, immediate subsequent thereto, the speed of travel must be reduced, it being imperative that the driver takes care that the speed of travel does not suddenly increase after the machines 12 and 19 have been lifted from the soil. During or immediately subsequent to these actions said 180° curve must be initiated by means of steering the front wheels 7.

From these operations to be performed, it will be obvious that in a very short period of time the levers 33, 34, 35, the clutch 31, the brake 32 and the levers, not shown, for controlling the eingine or the gear box, respectively, must be operated in a predetermined sequence. In order to facilitate the task of the driver and to reduce the risk of errors and/or accidents, the lifting devices are operable by means of a sound-responsive circuit and a number of control members (for example the control members for the lifting devices, the brake, the clutch) are operable by means of a circuit which responds to the driver's speech and/or voice. To that end, a speech and/or voice-controlled circuit 36 (Fig. 2) is provided in the cabin 6, which is operable by the driver's speech and/or voice by means of a microphone 37 arranged near the head of the driver sitting in the driver's seat 29 and is preferably fitted to the roof of the cabin 6, preferably straight above the steering wheel 30 and at a height which is somewhat greater than the top of the driver's head.

When the circuit 36 is operative, the acoustic, analog signal spoken by the driver into the microphone 37 is applied by means of a switch 38 to either an input 39, or to an input 40 of a speech analyser 41 (see the circuit diagram of the circuit of Fig. 5). The input 39 is intended for normal operation of the device 36, whilst the input 40 is intended for determining the nature of the acoustic commands of the device; this is effected before initiation of the use of the device by the driver itself, whose speech and/or voice is characteristic of this specific driver; any other driver has a voice with a different characteristic which distinguishes it from that of almost any other person.

The speech analyser 41 is arranged such that the analog signal incoming from the microphone 37 and representing a given word, is analysed in each one of a plurality of frequency ranges of that signal as regards amplitude and duration and the results are laid down in the shape of a digital word. The words or commands to be spoken by the driver for operating the control members, such as, for example, lifting device, brake, clutch, can, for example, be spoken in the form of the words "one up", "two down", "three centre", "one centre", "two up", etc., the word fractions "one", "two", "three" relating to the front, centre and rear lifting devices, respectively, which are numbered in the sequence "one", "two" and "three", whilst always the last fractions of the words relate to the highest ("up"), the centre ("centre") and lowest ("down") position of the lifting device. The brake commands can, for example, be given using the words "brake" and "release", thus indicating whether the brakes must be operated or not. Words containing two or more word fractions are pronounced immediately after each other, without a break. It is of course alternatively possible to speak the commands in a different language or to use fantasy words not occurring in normal spoken language.

It is then important to make the largest possible distinctions between the nature of the individual commands, so that each word can be clearly distinguished from any of the other words. This distinctive character relates to the nature of the sound pattern, that is to say to the amplitudes and amplitude ratios, respectively, occurring in each frequency range.

Before the voice-controlled circuit 36 is taken into use, the driver speaks the above-mentioned words which are necessary for controlling the device, separately in a chosen sequence into the microphone 37, whose analog signal reaches the speech analyser 41 via the input 40. The voice and/or speech analyser 41 is coupled to a microprocessor 42 to which a software-defined instruction memory 43 is added. The speech analyser 41 is arranged such that (however only when the input 40 is energised via switch 38) if after each word spoken by the future user no signal is received during a predetermined, short period of time, it applies via a connection 44 a pulse to the microprocessor 42, in response to which said word formed by the speech analyser 41 is entered into a number of memory locations, determined by said software, of an erasable memory 45 via a connection 46 between the speech analyser 41 and the memory 45. Said period of time during which no signal is received, so the interval between two spoken words, must, for example, be at least one to two seconds.

The pulses produced by said speech analyser 41 prepare a subsequent number of memory locations of the memory 45 for receiving a subsequent word formed by the speech analyser 41, this preparation of the memory locations being effected by the combination of the microprocessor 42 and the associated instruction memory 43 via a connection 47. If said subsequent word has been spoken by the future user and the end of that word has again been recognised from the fact that no analog signal is received during a short period of time, then the speech and/or voice analyser 41 again applies a pulse via the connection 44 to the microprocessor 42 which enters the digital word formed last by the analyser 41 into the second number of memory locations which are in the stand-by state, and at the same time reserves a subsequent number of memory locations for a subsequent word. This is repeated until all the words required for operating the control members of the tractor have been spoken by the user.

The memory outputs of the memory 45 are connected via a memory bus 48 to a comparator 49, whose number of inputs corresponds to the number of bytes necessary for characterizing the nature of the speech and/or voice of a speaker for each pronounced word.

In order to operate the voice-controlled circuit 36, the switch 38 is moved to the position which corresponds to the input 39 of the speech analyser 41. The use of the input 39 of the speech analyser also implies that a connection 50 between the speech analyser 41 and the comparator 49 is taken into use, and also that the connection 46 between the analyser 41 and the memory 45 is disconnected. The connections 46 and 50 are also in the form of busses.

An acoustic signal spoken by the speaker during operation of the circuit, is entered into the speech analyser 41 via the input 39, after having been converted by the microphone 37, and analysed in the same way as in the above-described case in which the preparations for taking the device into use by a specific person was described. The resultant digital word is applied via the bus 50 to the comparator 49 which compares the word with each of the words stored in said groups of memory locations of the memory 45. Scanning these memory locations is controlled by a micro-processor 51 which is added to the comparator 49 and comprises an instruction store. If the comparator 49 finds that a word received via the connection 50 from the speech analyser 41 corresponds to one of the words stored in the memory 45, the comparator supplies from its output bus 52 a digital number which corresponds to the number of the set of memory locations in which the relevant, recognised word occurs in the memory 45. This digital number may be of a limited size, for example, one of the number one to fifteen, since the number of acoustically entered words is generally limited to such a number. This digital number or output of the circuits is compared, for example by means of a series of simple four-bit comparators 53, to the numerical values associated with control switches of the control members of the tractor itself. Thus, one of the switches, possibly after amplification, is provided with a pulse which effects the mechanical control of the relevant control member.

The use of the above-described, voice-controlled circuit is thus limited to use by one specific person. Consequently the circuit cannot be used by any other person. If, however, it is desirable that the tractor can also be used by other persons, an erase device 54 must be added, which, by·operating a switch or a pushbutton erases all the memory locations of the memory 45. The subsequent user must then of course repeat the above-described procedure.

The above indentified voice recognition 36 includes an on/off switch 55 (Fig. 2) which is coupled mechanically to the foot brake 32 and the clutch 31 of the tractor in such manner that, if these pedals are operated by the driver, the circuit 36 no longer has any influence on the operation of the control members of the tractor.

Using the circuit 36 it is possible to operate controllable tractor components in a time sequence desired by the driver, for example the above-mentioned sequence of lifting the lifting devices.

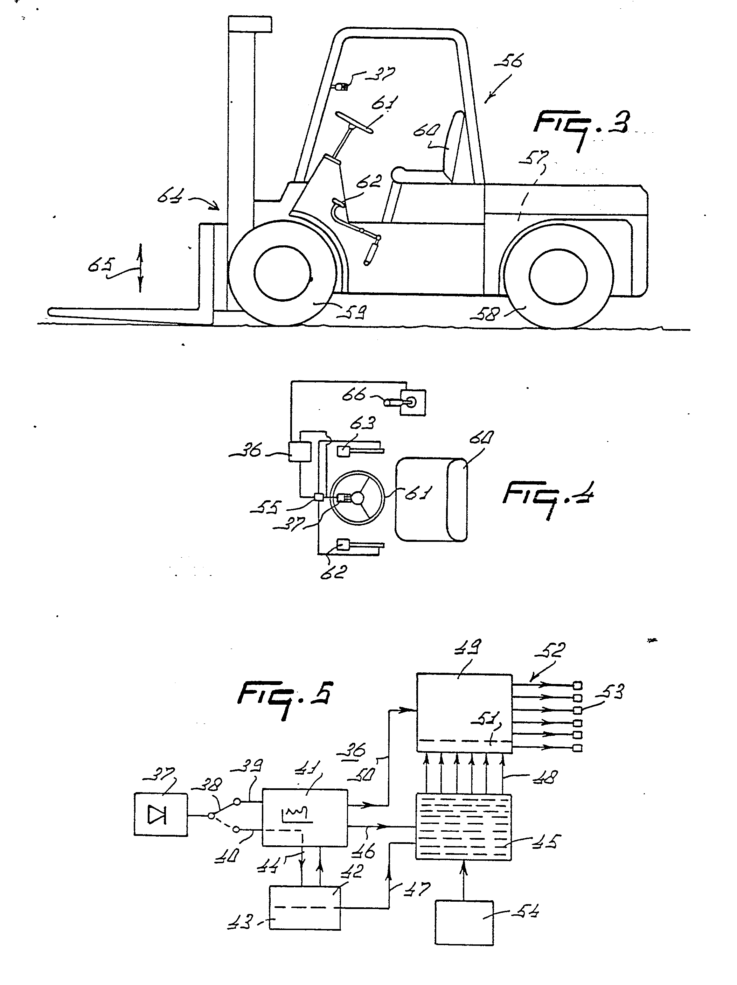

The voice-controlled circuit 36 can also be used for operating control members of other vehicles, for example the fork-lift truck 56 shown in Figures 3 and 4. This fork-lift truck has a drive motor 57 driving the rear wheels 58. The fork-lift truck is further supported by front wheels 59 which are steerable from a driver's seat 60 by means of a steering wheel 61. Additionally, the vehicle includes a clutch between the drive motor 57 and the rear wheels 58 which is operable by means of a clutch pedal 62. The wheels 58 have brakes which are operable by means of a brake pedal 63. A lifting device 64 which is hydraulically movable up and down in the directions 65 is operable by a lever 66.

The fork-lift truck 56 includes a speech and/or voice-controlled circuit 36 which also incorporates an on/off switch 55. For this circuit and switch, respectively, the same properties and functions hold as those of the preceding embodiment. The circuit 36 of Figure 4 is operated by a microphone 37 arranged straight above the steering wheel 61 and in the region of the head of the driver of the fork-lift truck.

Before the fork-lift truck is taken into use by a specific driver, this driver, as was also the case in the preceding embodiment, must speak the relevant commands for the fork-lift truck for storage in the circuit, the switch 38 being connected to the input 40. These commands relate to lifting the fork, operating the brakes and the clutch, so that the driver, more specifically during manoeuvring within very limited spaces, can focus his full attention, as regards bodily movements, to operating the steering wheel 61 when the switch 38 has been moved to the operating position, that is to say the voice-controlled circuit is connected to the input 39 of the speech analyser 41, as described with reference to the first embodiment.

For both embodiments the advantages provided by a voice-recognition system can be employed by storing, in addition to the other control commands, before the circuit 36 is made operative, the command "stop", which command, in the operating condition of the device, corresponds to operating the brake device such that an emergency stop can be made in the event of danger.

It will be obvious that the circuit 36 is also suitable for use with vehicles of different types, such as mobile cranes, earth-moving machines etc.

Although certain features of the vehicle that have been described and/or that are illustrated in the accompanying drawings will be set forth in the following claims as inventive features, it is emphasized that the invention is not necessarily limited to those features and that it includes within its scope each of the parts of the vehicle that has been described, and/or that is illustrated in the accompanying drawings, both individually and in various combinations.

## Claims

1. A vehicle comprising an engine (2) a driver's seat (29), a plurality of engine-driven propelling means (5, 7) such as wheels, and at least one lifting device (8, 13, 22), characterized in that at least the lifting device can be operated by means of a sound-responsive circuit (36).

2. A vehicle as claimed in claim 1, characterized in that the lifting device (8, 13, 22) is operable by acoustic signal the of the driver's voice and/or speech.

3. A vehicle as claimed in claim 1 or 2, characterized in that the circuit has one or a plurality of outputs, each effecting operation of a mechanical control member (31 to 36, 62, 83, 66) of the vehicle.

4. A vehicle as claimed in claim 3, characterized in that the output supplies a pulse if the driver pronounces a word which is representative of that output.

5. A vehicle as claimed in any one of the preceding claims, characterized in that the circuit includes at least one microphone (37).

6. A vehicle as claimed in claim 5, characterized in that the microphone (37) is coupled to a speech and/or voice analyser (41) which analyses for at least amplitude and duration each spoken acoustic signal or command in several frequency ranges and reproduces the result in a digital word.

7. A vehicle as claimed in claim 6, characterized in that the digital word is stored in a group of memory locations of a memory (45) associated with the circuit.

8. A vehicle as claimed in claim 6 or 7, characterized in that during operation a comparator - (49) compares the digital word with all the words stored in the memory (45).

9. A vehicle as claimed in claim 8, characterized in that, when a word agrees to a word stored in the memory, the comparator supplies a further digital word which actuates one of the mechanical control members (31 to 36, 62, 63, 66) of the vehicle.

10. A vehicle as claimed in any one of the preceding claims, characterized in that the vehicle is an agricultural tractor provided at its front side with a lifting device (8).

11. A vehicle as claimed in any one of the preceding claims, characterized in that the tractor has a lifting device (13) connected to its rear side.

12. A vehicle as claimed in any one of the preceding claims, characterized in that a lifting device (22) operable from the driver's seat of the tractor is arranged between two implements connected to the tractor.

13. A vehicle as claimed in any one of the preceding claims, characterized in that the lifting device (8, 13, 22) can be moved by three differently spoken commands from an initial position into a mechanically defined lifted position, a centre position or a lower position.

14. A vehicle as claimed in any one of the preceding claims, characterized in that by means of different commands two or more lifting devices - (8, 13, 22) can be moved time-sequentially to a defined position.

15. A vehicle as claimed in any one of the preceding claims, characterized in that the vehicle includes a brake which is operable by the sound-responsive circuit.

16. A vehicle as claimed in any one of the preceding claims, characterized in that the vehicle is an agricultural tractor.

17. A vehicle as claimed in any one of the preceding claims, characterized in that the vehicle is a fork-lift truck.

18. A vehicle as claimed in any one of the preceding claims, characterized in that the vehicle is a mobile crane.

19. A sound-responsive circuit intended for a vehicle as claimed in any one of the preceding claims.

FIG. 1

FIG. 2

0 216 410

FIG.3

FIG.4

FIG.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | COAL AGE, vol. 86, no. 4, April 1981, pages 108-112, New York, US; N.P. CHIRONIS: "Dragline computer improves control" * Figures; page 112 * | 1-3 | E 02 F 9/20 |
| Y | DE-A-3 238 853 (NISSAN MOTOR CO.) * Page 5, lines 1-5; figures 1,2 * | 1,3 | |
| A | | 4-9 | |
| A | US-A-4 501 012 (KISHI) * Figures 1,2 * | 4,9 | |

**TECHNICAL FIELDS SEARCHED (Int. Cl.4)**

E 02 F
B 60 Q

The present search report has been drawn up for all claims

| Place of search | Date of completion of the search | Examiner |
|---|---|---|
| THE HAGUE | 17-11-1986 | CNILLON C.G.A. |